# EUROPEAN PATENT APPLICATION

(11) **EP 4 733 282 A1**
(43) Date of publication of application: **29.04.2026**
(21) Application number: 24825967.3
(22) Date of filing: 20.06.2024
(51) Int. Cl.: C04B 18/167, B29B 17/00, C04B 14/38, C04B 18/20, C04B 20/00, C04B 28/02

(54) **FIBER MATERIAL FOR CEMENT/CONCRETE REINFORCEMENT, METHOD FOR PRODUCING FIBER MATERIAL FOR CEMENT/CONCRETE REINFORCEMENT, AND FIBER-REINFORCED CEMENT COMPOSITION**

(30) Priority: 22.06.2023 JP 2023102539
(71) Applicant: TOYOTA JIDOSHA KABUSHIKI KAISHA, Toyota-shi Aichi 471-8571 (JP)
(72) Inventor: HIRATA Takayoshi, Kiyose-shi, Tokyo 204-8558 (JP); NUMATA Yusuke, Toyota-shi, Aichi 471-8571 (JP); SUKEDA Takuya, Toyota-shi, Aichi 471-8571 (JP)
(74) Representative: TBK
(86) International application number: PCT/JP2024/022352
(87) International publication number: WO 2024/262566

(57) **Abstract**

To inexpensively and efficiently obtain a versatile and practical fiber material for cement/concrete reinforcement from TPP scraps or CFRP waste. The invention provides a fiber material for cement/concrete reinforcement obtained by recycling scraps of a carbon fiber-reinforced resin generated in the manufacturing process of a molded product using the carbon fiber-reinforced resin, or waste of the carbon fiber-reinforced resin recovered from the molded product, wherein the fiber material is formed into strips and the thermosetting resin is cured.

## Description

### Technical Field

The present disclosure relates to a fiber material for cement/concrete reinforcement, a method for producing the fiber material for cement/concrete reinforcement, and a fiber-reinforced cement composition. In particular, it relates to a technology suitable for recycling carbon fiber-reinforced plastics (CFRP), which are composites of carbon fibers and thermosetting resins.

### Background Art

CFRP has high tensile strength, high elasticity, and high durability, while also being lightweight. For this reason, it has been used in a wide range of fields such as automobile parts, aircraft parts, and sporting goods. However, compared with other fibers, the carbon fibers contained in CFRP produce a large amount of carbon dioxide during manufacture, and due to their flame resistance, disposal options are limited, resulting in a significant environmental burden. Accordingly, in recent years, toward building a recycling-oriented society and realizing a carbon-recycling society, there has been a strong demand for the establishment of technology to reuse tow prepreg (hereinafter referred to as TPP) scraps generated during the manufacturing process of CFRP products (moldings), as well as CFRP waste recovered from post-manufacturing CFRP products.

For example, Patent Literature 1 discloses a technique in which a carbon fiber-reinforced resin composite material (CFRCM) is pulverized, the resin contained in the pulverized material is heated and decomposed with normalpressure steam at 300°C to 600°C to remove it, thereby obtaining regenerated carbon short fibers, and the obtained regenerated carbon short fibers are reused as reinforcing fibers for cement compositions.

In addition, Patent Literature 2 discloses a technique in which chips generated from waste CFRP products or during the manufacture of CFRP products are pulverized, and the thermosetting resin is thermally decomposed from the pulverized material, thereby obtaining recycled carbon fiber bundles with variation in resin residue of less than 15%, and the obtained recycled carbon fiber bundles are reused as reinforcing fiber materials for cement compositions.

### Citation List

### Patent Literature

[PTL 1] JP 2013-087269 A
[PTL 2] JP 2021-138077 A

### Summary of Invention

### Technical Problem

In order to contribute to a recycling-oriented society and a carbon-recycling society, it is desirable to reuse TPP scraps and CFRP waste as highly versatile fiber materials for cement/concrete reinforcement. To achieve this, the fiber material for cement/concrete reinforcement obtained from TPP scraps and CFRP waste must be made into a practical reinforcing fiber material that can be widely applied not only to cement compositions for special applications but also to ordinary cement compositions used at many construction sites.

Furthermore, for the fiber material for cement/concrete reinforcement obtained from TPP scraps and CFRP waste to have both versatility and practicality, it needs to possess performance equivalent to or greater than commonly used polypropylene (hereinafter referred to as PP) fibers. Specifically, it must satisfy uniform dispersibility, fresh properties suitable for construction as ordinary concrete, and workability and strength properties equal to or greater than those of PP fibers.

Patent Literature 1 describes the compressive strength and flexural strength of cement compositions containing regenerated carbon short fibers, but it does not describe dispersibility or fresh properties, and it is unclear what characteristics they exhibit. Patent Literature 2 describes that mixing recycled carbon fiber bundles into concrete or mortar improves mechanical properties, but it does not provide specific numerical values for workability or strength properties, and it is unclear what characteristics they exhibit.

In addition, both Patent Literatures 1 and 2 thermally decompose the matrix resin of the base material by heat-treating the pulverized material at high temperatures. Therefore, the heat treatment requires time, increases energy consumption, and causes problems such as deterioration in productivity and an increase in manufacturing costs. Moreover, high-temperature heat treatment may cause degradation of the regenerated carbon fibers. Furthermore, in Patent Literatures 1 and 2, CFRCM or CFRP is pulverized, requiring classification treatment of the pulverized material. That is, in addition to a pulverizer, a classifier is also necessary, resulting in largescale manufacturing equipment.

The technology of the present disclosure has been devised in view of the above circumstances, and its objective is to provide a technology capable of inexpensively and efficiently obtaining fiber materials for cement/concrete reinforcement with versatility and practicality from TPP scraps and CFRP waste.

### Solution to Problems

According to one embodiment of the present disclosure, there is provided a fiber material for cement/concrete reinforcement. The fiber material for cement/concrete reinforcement is obtained by recycling scraps of a carbon fiber-reinforced resin generated in the manufacturing process of a molded product using the carbon fiber-reinforced resin, or waste of the carbon fiber-reinforced resin recovered from the molded product, wherein the fiber material is formed into strips, and the thermosetting resin is cured.

In the fiber material for cement/concrete reinforcement according to another aspect of the present disclosure, preferably, the strip has a width of 0.5 mm to 3.0 mm, more preferably 1.0 mm to 2.0 mm, and a length of 15.0 mm to 70.0 mm, more preferably 20.0 mm to 40.0 mm.

In the fiber material for cement/concrete reinforcement according to another aspect of the present disclosure, preferably, the carbon fiber-reinforced resin is formed by bundling 1,000 or more carbon fibers having a diameter of 5 µm to 10 µm with a thermosetting resin, and the strip has a flexural strength of 150 MPa or more in a three-point bending test due to curing of the thermosetting resin.

According to one embodiment of the present disclosure, there is provided a method for producing a fiber material for cement/concrete reinforcement. The method for producing a fiber material for cement/concrete reinforcement, the fiber material being obtained by recycling scraps of a carbon fiber-reinforced resin generated in the manufacturing process of a molded product using the carbon fiber-reinforced resin, or waste of the carbon fiber-reinforced resin recovered from the molded product. The method comprising a curing step of curing the thermosetting resin in an uncured state, and a cutting step of cutting the scraps or the waste into strips, wherein the curing step and the cutting step are carried out in no particular order.

In the method for producing a fiber material for cement/concrete reinforcement according to another aspect of the present disclosure, it is desired that in the cutting step, the scraps or the waste are cut so as to have a width of 0.5 mm to 3.0 mm, more preferably 1.0 mm to 2.0 mm, and a length of 15.0 mm to 70.0 mm, more preferably 20.0 mm to 40.0 mm.

In the method for producing a fiber material for cement/concrete reinforcement according to another aspect of the present disclosure, it is desired that the carbon fiber-reinforced resin is formed by bundling 1,000 or more carbon fibers having a diameter of 5 µm to 10 µm with a thermosetting resin, and in the curing step, curing the thermosetting resin provides a flexural strength of 150 MPa or more in a three-point bending test.

According to one embodiment of the present disclosure, there is provided a fiber-reinforced cement composition. The fiber-reinforced cement composition comprises the fiber material for cement/concrete reinforcement added to concrete, mortar, or grout.

### Effect of Invention

According to the technology of the present disclosure, it is possible to inexpensively and efficiently obtain a fiber material for cement/concrete reinforcement having versatility and practicality from TPP scraps and CFRP waste.

### Brief Description of Drawings

FIG. 1 is a diagram schematically illustrating a fiber material for cement/concrete reinforcement according to the present invention.
FIG. 2 is a flow diagram explaining the outline of an apparatus for producing the fiber material for cement/concrete reinforcement according to the present invention.
FIG. 3 is a flow diagram showing the production process of the fiber material for cement/concrete reinforcement according to the present invention.

### Description of Embodiments

Hereinafter, the fiber material for cement/concrete reinforcement, the method for producing the fiber material for cement/concrete reinforcement, and the fiber-reinforced cement composition according to the present invention will be described in detail.

### [Cement/Concrete Reinforcing Fiber Material]

The fiber material for cement/concrete reinforcement of the present invention is obtained from CFRP in which a plurality of carbon fibers are combined with a matrix resin serving as the base material. From the perspective of carbon recycling, the fiber material for cement/concrete reinforcement of the present invention is manufactured by reusing TPP scraps generated during the manufacturing process of CFRP products, or CFRP waste recovered from CFRP products after manufacturing.

Here, TPP scraps refer to tape-like or sheet-like remnants of TPP that become surplus when manufacturing CFRP products using TPP. CFRP waste refers to tape-like or sheet-like CFRP members recovered by peeling off or otherwise retrieving them from CFRP products manufactured using TPP. The CFRP products are not particularly limited, but examples include automobile body parts and hydrogen tanks mounted on fuel cell vehicles (FCVs). It should be noted that the present invention does not exclude obtaining fiber materials for cement/concrete reinforcement from new TPP or CFRP.

The type of carbon fiber is not particularly limited, as long as the material is mainly composed of carbon. Examples of carbon fibers include PAN-based carbon fibers derived from polyacrylonitrile fibers, and pitch-based carbon fibers derived from coal pitch or petroleum pitch. The form of the carbon fibers is also not particularly limited; they may be irregularly dispersed in the matrix resin, or they may be regularly dispersed.

The matrix resin is not particularly limited, but in the present invention, it is preferably a thermosetting epoxy resin. Examples of epoxy resins include bisphenol A type epoxy resin, bisphenol AD type epoxy resin, bisphenol F type epoxy resin, phenol novolac type epoxy resin, cresol novolac type epoxy resin, and glycidyl ester type epoxy resin. The epoxy resin may be used alone as a single type, or a combination of two or more types may be used. Other thermosetting resins include phenolic resin, vinyl ester resin, nylon resin, and acrylic resin.

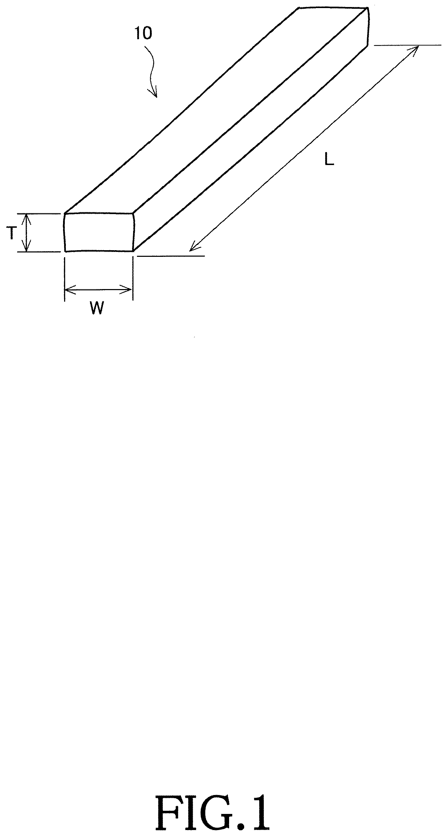

FIG. 1 is a diagram schematically illustrating a fiber material 10 for cement/concrete reinforcement according to the present invention.

The fiber material 10 for cement/concrete reinforcement is produced by processing sheet-like or tape-like TPP scraps or CFRP waste into a shape that can be safely and efficiently added to cement compositions. The cross-sectional shape of the fiber material 10 for cement/concrete reinforcement is substantially rectangular. The thickness T of the fiber material 10 for cement/concrete reinforcement is, for example, 0.05 mm to 2.0 mm, preferably 0.05 mm to 1.0 mm. The fiber material 10 for cement/concrete reinforcement is bound with epoxy resin, and 1,000 or more carbon fibers are bundled together by the epoxy resin. The diameter of the carbon fibers is about 5 µm to 10 µm. It should be noted that, in the case of obtaining the fiber material for cement/concrete reinforcement from new TPP or CFRP, the cross-sectional shape is not limited to rectangular, but may also be circular or elliptical.

The epoxy resin contained in the TPP scraps or CFRP waste may be in an uncured (semi-cured) state. In this specification, "fully cured" means a state in which further heat treatment will not substantially advance the curing, for example, cured at 90% or more, preferably 95% or more. "Uncured" means a state in which curing substantially progresses upon heat treatment. When a cement/concrete reinforcing fiber material in which the epoxy resin bundling the carbon fibers is in an uncured state is added, slippage occurs in the epoxy resin layer surrounding the carbon fibers after initial cracking occurs in the fiber-reinforced cement composition. Therefore, a fiber-reinforced cement composition containing a cement/concrete reinforcing fiber material in which the epoxy resin is uncured is considered to exhibit lower flexural strength properties compared with a fiber-reinforced cement composition containing commonly used PP fibers.

In the present invention, when obtaining the fiber material 10 for cement/concrete reinforcement from TPP scraps or CFRP waste, the uncured epoxy resin is cured by heat treatment or the like. The cement/concrete reinforcing fiber material 10 in which the epoxy resin is substantially fully cured maintains a flexural strength of 150 MPa or more. Accordingly, the fiber material 10 for cement/concrete reinforcement of the present invention enables the flexural strength properties of the fiber-reinforced cement composition to be equal to or greater than those of conventional PP fibers.

If the width of the fiber material for cement/concrete reinforcement is too large, the fibers split during mixing, resulting in poor dispersibility. Moreover, when the width of the fiber material for cement/concrete reinforcement is large, the air content of the cement composition increases compared with the case of adding PP fibers, and it is considered that the compressive strength of the fiber-reinforced cement composition decreases.

In the present invention, to obtain the fiber material 10 for cement/concrete reinforcement, the TPP scraps or CFRP waste are cut into strips of predetermined dimensions suitable for addition to cement compositions. Specifically, the width W of the fiber material 10 for cement/concrete reinforcement is preferably 0.5 mm to 3 mm, more preferably 1.0 mm to 2.0 mm. The length L of the fiber material 10 for cement/concrete reinforcement is preferably 15 mm to 70 mm, equivalent to the length of commonly used PP fibers, more preferably 20 mm to 40 mm. As a result, according to the fiber material 10 for cement/concrete reinforcement of the present invention, uniform dispersibility, fresh properties suitable for construction as ordinary concrete, and workability and strength properties equal to or greater than those of PP fibers can be achieved.

### [Cement/Concrete Reinforcing Fiber Material Production Method]

Next, a description will be given of the method for producing the fiber material for cement/concrete reinforcement according to the present invention.

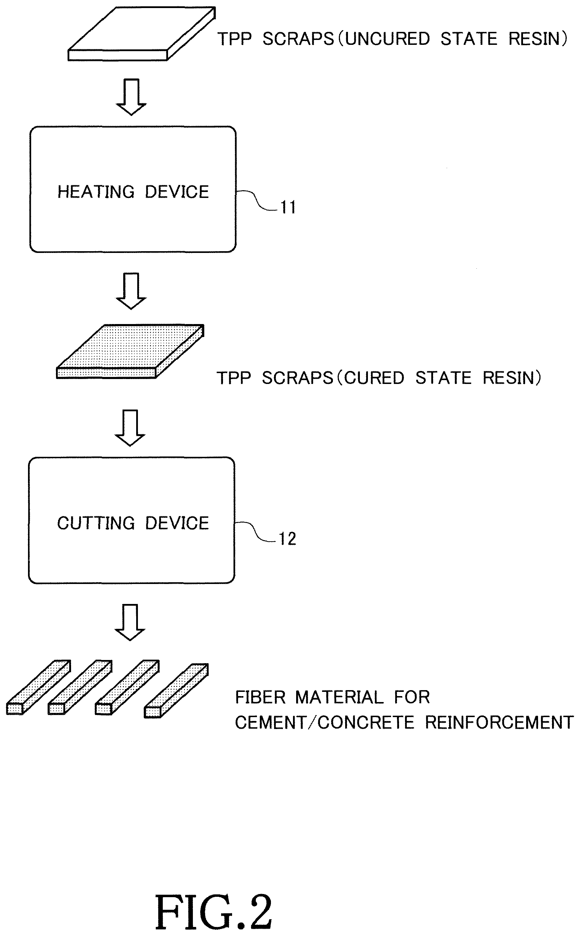

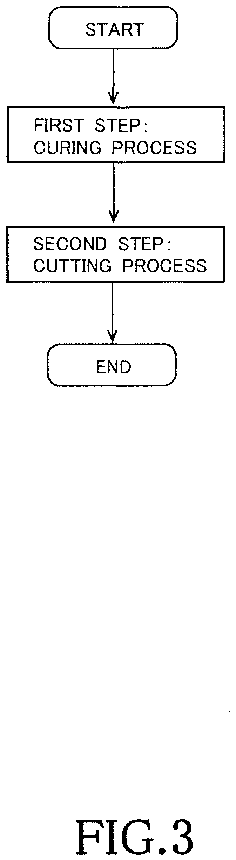

FIG. 2 is a flow diagram explaining the outline of the apparatus for producing the fiber material for cement/concrete reinforcement according to the present invention. FIG. 3 is a flow diagram showing the production process of the fiber material for cement/concrete reinforcement according to the present invention. In the following description, it is assumed that TPP scraps are used in the production of the fiber material for cement/concrete reinforcement.

In the first step, the TPP scraps are placed into a heating device 11, and the epoxy resin in an uncured state is fully cured. The heating method of the heating device 11 is not particularly limited and may be, for example, a hot-air type or an electric heater type. The heating temperature and heating time by the heating device 11 are also not particularly limited, as long as they can be appropriately set within a range that allows the uncured epoxy resin to be fully cured. For example, the heating temperature is preferably 80°C to 200°C, and the heating time is preferably 1 minute to 12 hours. By fully curing the epoxy resin, the flexural strength of the TPP scraps in a three-point bending test becomes 150 MPa or more.

In the second step, the TPP scraps with the epoxy resin cured are placed into a cutting device 12 and cut into a shape suitable for addition to cement compositions such as concrete, mortar, or grout. The cutting device 12 automatically cuts the introduced TPP scraps into strips with a width of 0.5 mm to 3 mm and a length of 15 mm to 70 mm. By cutting the TPP scraps using the cutting device 12, the fiber material for cement/concrete reinforcement of the present invention, containing regenerated carbon fibers as reinforcement, is obtained.

According to the method for producing the fiber material for cement/concrete reinforcement of the present invention, in the first step, instead of removing the uncured epoxy resin by thermal decomposition, the resin is fully cured to obtain the fiber material for cement/concrete reinforcement. That is, compared with the conventional technique in which the epoxy resin is removed by thermal decomposition, energy consumption due to heating can be reduced and the heating time can be shortened. This makes it possible to manufacture the fiber material for cement/concrete reinforcement inexpensively and efficiently from TPP scraps and the like, thereby achieving improved productivity.

In addition, in the second step, the TPP scraps are not pulverized but instead cut into strips suitable for addition to cement compositions. That is, the classification step required after pulverization in the conventional technique can be omitted. As a result, classification devices and the like become unnecessary, and simplification of manufacturing equipment can also be achieved.

### [Examples]

The following describes demonstration tests conducted to confirm the performance characteristics of the fiber material for cement/concrete reinforcement of the present invention. It should be noted that the present invention is not limited to the following examples.

### [Demonstration Test 1: Comparative Example]

In Demonstration Test 1, a cement/concrete reinforcing fiber material in which the epoxy resin was in an uncured state (hereinafter referred to as "uncured resin fiber material") and general-purpose PP fibers (trade name: BarChip MK2030, manufactured by BarChip Inc.) were used, and their fresh properties and hardened concrete properties were compared. The uncured resin fiber material serves as a comparative example of the present invention.

Details of Base Concrete 1 used in Demonstration Test 1 are as follows:
<Base Concrete 1>
W/C: 55%
s/a: 49%
Slump: 18 cm
Air content: 4.0%
Compressive strength: 41 N/mm²

To the above Base Concrete 1, the uncured resin fiber material and the PP fibers were each added and mixed. The shapes of each fiber and the details of the addition conditions are as follows:
<Comparative Example: Uncured Resin Fiber Material>
   Width: 20 mm
   Length: 30 mm
   Cross-sectional shape: substantially rectangular
   Addition rate: 0.3 vol.%
   Remarks: Epoxy resin uncured
<PP Fibers>
   Length: 30 mm
   Nominal fiber diameter: 0.5 mm
   Cross-sectional shape: substantially elliptical
   Addition rate: 0.3 vol.%
   Remarks: Embossed surface

Concrete mixing was carried out in a thermostatic and humid room at a temperature of 20 ± 2°C and a relative humidity of 60% or more, using a mixer. Each fiber was gradually introduced after producing the base concrete, while operating the mixer, by loosening the fibers by hand. The mixing time from fiber introduction to discharge was determined as appropriate by visually checking the dispersion condition of the fibers.

For the concrete mixed with each fiber, slump tests, air content measurements, and checks of fresh properties were conducted. The slump test was performed in accordance with JIS A 1101 "Method of slump test for concrete." The air content was measured in accordance with JIS A 1128 "Method of measurement for air content of fresh concrete by the pressure method - chamber pressure method." The fresh properties of the concrete were visually observed.

Furthermore, test specimens were prepared from the concrete mixed with each fiber, and in order to confirm the properties of the hardened concrete, a compressive strength test and a flexural toughness test were carried out. The compressive strength test was conducted in accordance with JIS A 1108 "Method of compressive strength test for concrete." The flexural toughness test was conducted in accordance with JSCE-G 552 "Method of test for flexural strength and flexural toughness of steel fiber-reinforced concrete."

The results of Demonstration Test 1 are shown in Table 1.

**[Table 1]**

| Type | Width (mm) | Length (mm) | Fiber Addition Rate (vol.%) | Slump (cm) | Air Content (%) | Compressive Strength (N/mm²) | Flexural Strength (N/mm²) | Flexural Toughness Index (N/mm²) |
|---|---|---|---|---|---|---|---|---|
| Base Concrete 1 | - | - | - | 18 | 4.0 | 41 | - | - |
| Uncured Resin Fiber Material (Comparative Example) | 20 | 30 | 0.3 | 1.5 | 4.6 | 36.7 | 6.1 | 1.16 |
| PP Fiber | - | 30 | 0.3 | 11.5 | 3.7 | 39.1 | 5.7 | 1.30 |

The uncured resin fiber material had a width of 20 mm, which is larger than that of the PP fibers. Therefore, the concrete mixed with the uncured resin fiber material exhibited an increased air content and reduced compressive strength compared with the concrete mixed with PP fibers. In addition, because the epoxy resin bundling the carbon fibers was not fully cured, after flexural cracks developed in the concrete, the carbon fibers could not anchor to the matrix and slipped out. As a result, the concrete mixed with the uncured resin fiber material exhibited a lower flexural toughness index compared with the concrete mixed with PP fibers. From the above, it was confirmed that the comparative uncured resin fiber material could not exhibit fresh properties and hardened concrete properties equivalent to or greater than those of general-purpose PP fibers.

### [Demonstration Test 2: Examples 1-3]

In Demonstration Test 2, the fiber material for cement/concrete reinforcement of the present invention, in which the epoxy resin was fully cured, and general-purpose PP fibers (trade name: BarChip MK2030, manufactured by BarChip Inc.) were used, and their fresh properties and hardened concrete properties were compared.

Details of Base Concrete 2 used in Demonstration Test 2 are as follows:
<Base Concrete 2>
W/C: 55% - s/a: 49%
Slump: 19 cm
Air content: 4.2%
Compressive strength: 35.2 N/mm²
Flexural strength: 4.5 N/mm²
Flexural toughness index: 0.46 N/mm²

The above Base Concrete 2 was mixed with the fiber material for cement/concrete reinforcement of the present invention and with PP fibers, respectively. In Demonstration Test 2, the width of the fiber material for cement/concrete reinforcement was varied. The shapes of each fiber and the details of the addition conditions are as follows:

### <Example 1: Fiber Material for Cement/Concrete Reinforcement>

Width: 2.0 mm
Length: 30 mm
Cross-sectional shape: substantially rectangular
Addition rate: 0.2 vol.%
Remarks: Epoxy resin cured

### <Example 2: Fiber Material for Cement/Concrete Reinforcement>

Width: 1.5 mm
Length: 30 mm
Cross-sectional shape: substantially rectangular
Addition rate: 0.2 vol.%
Remarks: Epoxy resin cured

### <Example 3: Fiber Material for Cement/Concrete Reinforcement>

Width: 1.0 mm
Length: 30 mm
Cross-sectional shape: substantially rectangular
Addition rate: 0.2 vol.%
Remarks: Epoxy resin cured

### <PP Fibers>

Length: 30 mm
Nominal fiber diameter: 0.5 mm
Cross-sectional shape: substantially elliptical
Addition rate: 0.3 vol.%
Remarks: Embossed surface

Concrete mixing was performed in the same manner as in Demonstration Test 1. For the concrete mixed with each fiber, slump tests, air content measurements, and checks of fresh properties were carried out in accordance with the procedures of Demonstration Test 1. In addition, in accordance with the procedures of Demonstration Test 1, test specimens were prepared from the concrete mixed with each fiber, and compressive strength tests and flexural toughness tests were conducted to confirm the hardened concrete properties.

The results of Demonstration Test 2 are shown in Table 2.

**[Table 2]**

| Type | Width (mm) | Length (mm) | Fiber Addition Rate (vol.%) | Slump (cm) | Air Content (%) | Compressive Strength (N/mm²) | Flexural Strength (N/mm²) | Flexural Toughness Index (N/mm²) |
|---|---|---|---|---|---|---|---|---|
| Base Concrete 2 | - | - | - | 19.5 | 4.2 | 35.2 | 4.5 | 0.46 |
| Example 1 | 2.0 | 30 | 0.2 | 14.0 | 4.9 | 33.9 | 5.2 | 2.52 |
| Example 2 | 1.5 | 30 | 0.2 | 12.0 | 4.5 | 35.2 | 5.1 | 1.71 |
| Example 3 | 1.0 | 30 | 0.2 | 12.5 | 4.2 | 35.6 | 5.7 | 1.64 |
| PP Fiber | - | 30 | 0.3 | 15.5 | 4.7 | 32.3 | 4.8 | 1.27 |

Comparing Examples 1 to 3, Examples 2 and 3, which had smaller widths, exhibited a greater slump reduction from Base Concrete 2 than PP fibers. In Example 1, where the width was 2.0 mm, the air content showed a slight tendency to increase, but the flexural toughness index exhibited the highest value. Although the addition rate in Examples 1 to 3 was 0.2 vol.%, both compressive strength and flexural strength properties were improved compared with PP fibers at an addition rate of 0.3 vol.%. From the above, it was confirmed that Examples 1 to 3 satisfied fresh properties and hardened concrete properties equal to or greater than those of PP fibers, even at two-thirds the dosage of general-purpose PP fibers.

### [Demonstration Test 3]

In Demonstration Test 3, the fiber material for cement/concrete reinforcement of the present invention, in which the epoxy resin was fully cured, and general-purpose PP fibers

(trade name: BarChip MK2030, manufactured by BarChip Inc.) were used, and their fresh properties and hardened concrete properties were compared.

Details of Base Concrete 3 used in Demonstration Test 3 are as follows:
<Base Concrete 3>
W/C: 55%
s/a: 49%
Slump: 19 cm
Air content: 5.0%
Compressive strength: 28.4 N/mm²

The above Base Concrete 3 was mixed with the fiber material for cement/concrete reinforcement of the present invention and with PP fibers, respectively. In Demonstration Test 3, the addition amount of the fiber material for cement/concrete reinforcement was varied. The shapes of each fiber and the details of the addition conditions are as follows:

### <Example 4: Fiber Material for Cement/Concrete Reinforcement>

Width: 2.3 mm
Length: 30 mm
Cross-sectional shape: substantially rectangular
Addition rate: 0.2 vol.%
Remarks: Epoxy resin cured

### <Example 5: Fiber Material for Cement/Concrete Reinforcement>

Width: 2.3 mm
Length: 30 mm
Cross-sectional shape: substantially rectangular
Addition rate: 0.3 vol.%
Remarks: Epoxy resin cured

### <PP Fibers>

Length: 30 mm
Nominal fiber diameter: 0.5 mm
Cross-sectional shape: substantially elliptical
Addition rate: 0.3 vol.%
Remarks: Embossed surface

Concrete mixing was carried out in the same manner as in Demonstration Tests 1 and 2. For the concrete mixed with each fiber, slump tests, air content measurements, and checks of fresh properties were conducted in accordance with the procedures of Demonstration Tests 1 and 2. In addition, in accordance with the same procedures, test specimens were prepared from the concrete mixed with each fiber, and compressive strength tests and flexural toughness tests were conducted to confirm hardened concrete properties.

The results of Demonstration Test 3 are shown in Table 3.

**[Table 3]**

| Type | Width (mm) | Length (mm) | Fiber Addition Rate (vol.%) | Slump (cm) | Air Content (%) | Compressive Strength (N/mm') | Flexural Strength (N/mm²) | Flexural Toughness Index (N/mm²) |
|---|---|---|---|---|---|---|---|---|
| Base Concrete 3 | - | - | - | 19 | 5.0 | 28.4 | - | - |
| Example 4 | 23 | 30 | 0.2 | 170 | 7.7 | 26.3 | 4.8 | 1.88 |
| Example 5 | 2.3 | 30 | 0.3 | 12.0 | 7.4 | 26.6 | 4.8 | 2.36 |
| PP Fiber | - | 30 | 0.3 | 15.5 | 6.7 | 26.3 | 4.4 | 1.17 |

In Example 4, where a 2.3 mm-wide fiber material for cement/concrete reinforcement was added at an addition rate of 0.2 vol.%, the slump reduction was smaller and the flexural strength properties improved compared with concrete mixed with PP fibers. In Example 5, where the 2.3 mm-wide fiber material for cement/concrete reinforcement was added at an addition rate of 0.3 vol.%, the slump reduction was larger than with PP fibers, but the flexural strength properties improved. From the above, it was confirmed that Examples 4 and 5 satisfied fresh properties and hardened concrete properties equal to or greater than those of general-purpose PP fibers.

### [Summary]

The results of Demonstration Tests 1 to 3 are summarized in Table 4. It should be noted that each value in Table 4 represents the difference from the base concrete.

**[Table 4]**

| | Type | Shapes | | Fiber Addition Rate (vol%) | Workability | Fresh Properties | | Strength Properties | | Overall Evaluation |
|---|---|---|---|---|---|---|---|---|---|---|
| | | Width (mm) | Length (mm) | | | Slump (cm) | Air Content (%) | Compressive Strength (N/mm²) | Flexural Toughness Index (N/mm²) | |
| Example 1 | Cement/Concrete Reinforcing Fiber Material | 2.0 | 30 | 0.2 | Good | -5.5 | +0.7 | -1.3 | +2.06 | Excellent |
| Example 2 | Cement Concrete Reinforcing Fiber Material | 15 | 30 | 02 | Good | -7.5 | +0.3 | 0 | +0.44 | Fair |
| Example 3 | Cement/Concrete Reinforcing Fiber Material | 1.0 | 30 | 0.2 | Good | -7.0 | 0 | +0.4 | + 1.18 | Good |
| Example 4 | Cement/Concrete Reinforcing Fiber Material | 2.3 | 30 | 02 | Good | -20 | +2.7 | -2.1 | +1.52 | Good |
| Example 5 | Cement, Concrete Reinforcing Fiber Material | 2.3 | 30 | 0.3 | Good | -7.0 | +2.4 | -1.8 | +1.8 | Good |
| Comparative Example | Uncured Resin Fiber Material | 20.0 | 30 | 0.3 | Poor | -16.5 | -0.6 | -4.3 | +0.48 | Poor |
| - | PP Fiber | - | 30 | 0.3 | Good | -4.0 | +0.5 | -2.9 | +0.81 | - |

In Example 1, although the slump reduction from the base concrete was larger than that with PP fibers, the flexural toughness index was significantly improved compared with PP fibers. As a result, Example 1 was rated as excellent.

In Example 4, the slump reduction from the base concrete was smaller than that with PP fibers, and although the flexural toughness index did not improve as much as in Example 1, it was nevertheless greater than that of PP fibers. In Examples 3 and 5, the slump reduction from the base concrete was larger than that with PP fibers, but the flexural toughness index was greater than that of PP fibers. As a result, Examples 3 to 5 were rated as good.

In Example 2, the flexural toughness index was smaller than that of PP fibers. However, the addition rate in Example 2 was 0.2 vol.%, while the addition rate of PP fibers was 0.3 vol.%. Therefore, it is presumed that in Example 2, if the addition rate were increased to the same 0.3 vol.% as PP fibers, the flexural toughness index would improve further. Accordingly, Example 2 was rated as fair.

In the Comparative Example, the slump reduction from the base concrete was larger than that with PP fibers, and the flexural toughness index was smaller than that of PP fibers. In addition, the fibers split and entangled during mixing, resulting in poor uniform dispersibility. Therefore, the Comparative Example was rated as poor.

From the above, it was confirmed that the fiber material for cement/concrete reinforcement of the present invention, obtained from TPP scraps or CFRP waste, can exhibit fresh properties and hardened concrete properties equal to or greater than those of general-purpose PP fibers, by fully curing the epoxy resin bundling the carbon fibers and forming the material into strips with a width of 0.5 mm to 3.0 mm and a length of 15.0 mm to 70.0 mm.

It should be noted that the present invention is not limited to the embodiments described above, and may be modified and implemented as appropriate within the scope not departing from the spirit of the invention. For example, although concrete was used in the above examples, the fiber material for cement/concrete reinforcement of the present invention may also be used as reinforcing fiber material for other cement compositions such as mortar or grout. Furthermore, embossing may be applied to the fiber material for cement/concrete reinforcement of the present invention, similar to PP fibers. If embossing is applied, further improvement in the hardened concrete properties can be expected.

In addition, in the above examples, the addition amount of the fiber material for cement/concrete reinforcement was in the range of 0.2 vol.% to 0.3 vol.%. However, depending on the flexural toughness required for the cement composition, the addition amount may be, for example, in the range of 0.01 vol.% to 50 vol.%. When a large addition amount is used, for example, the fiber material for cement/concrete reinforcement of the present invention may be pre-filled into the formwork, and cement paste may then be pressure-injected.

## Claims

1. A fiber material for cement/concrete reinforcement, obtained by recycling scraps of a carbon fiber-reinforced resin generated in the manufacturing process of a molded product using the carbon fiber-reinforced resin, or waste of the carbon fiber-reinforced resin recovered from the molded product,
wherein the fiber material is formed into strips, and the thermosetting resin is cured.

2. The fiber material for cement/concrete reinforcement according to claim 1,
wherein the strip has a width of 0.5 mm to 3.0 mm, more preferably 1.0 mm to 2.0 mm, and a length of 15.0 mm to 70.0 mm, more preferably 20.0 mm to 40.0 mm.

3. The fiber material for cement/concrete reinforcement according to claim 1 or 2,
wherein the carbon fiber-reinforced resin is formed by bundling 1,000 or more carbon fibers having a diameter of 5 µm to 10 µm with a thermosetting resin, and the strip has a flexural strength of 150 MPa or more in a three-point bending test due to curing of the thermosetting resin.

4. A method for producing a fiber material for cement/concrete reinforcement, the fiber material being obtained by recycling scraps of a carbon fiber-reinforced resin generated in the manufacturing process of a molded product using the carbon fiber-reinforced resin, or waste of the carbon fiber-reinforced resin recovered from the molded product, the method comprising:
a curing step of curing the thermosetting resin in an uncured state, and
a cutting step of cutting the scraps or the waste into strips,
wherein the curing step and the cutting step are carried out in no particular order.

5. The method for producing a fiber material for cement/concrete reinforcement according to claim 4,
wherein, in the cutting step, the scraps or the waste are cut so as to have a width of 0.5 mm to 3.0 mm, more preferably 1.0 mm to 2.0 mm, and a length of 15.0 mm to 70.0 mm, more preferably 20.0 mm to 40.0 mm.

6. The method for producing a fiber material for cement/concrete reinforcement according to claim 4 or 5,
wherein the carbon fiber-reinforced resin is formed by bundling 1,000 or more carbon fibers having a diameter of 5 µm to 10 um with a thermosetting resin, and in the curing step, curing the thermosetting resin provides a flexural strength of 150 MPa or more in a three-point bending test.

7. A fiber-reinforced cement composition, comprising the fiber material for cement/concrete reinforcement according to claim 1 or 2 added to concrete, mortar, or grout.
